# DEMANDE DE BREVET EUROPEEN

(11) **EP 1 130 277 A1**
(43) Date de publication de la demande: **05.09.2001**
(21) Numéro de dépôt: 01420054.7
(22) Date de dépôt: 28.02.2001
(51) Int. Cl.: F16C 29/02

(54) **Procédé de montage d'un chariot d'entraînement d'un appareil de marquage sur au moins un organe de guidage, et appareil de marquage correspondant**

(30) Priorité: 01.03.2000 FR 0002653
(71) Demandeur: Curreno, Marie-Christine, 69140 Rillieux (FR)
(72) Inventeur: Curreno, Marie-Christine, 69140 Rillieux (FR)
(74) Mandataire: Schouller, Jean-Philippe

(57) **Abrégé**

L'invention concerne le montage d'un chariot d'entraînement (110) d'un appareil de marquage sur au moins un organe de guidage (108), ledit chariot étant solidaire d'un palier (124) permettant le glissement du chariot sur l'organe de guidage (108).

On ménage, dans le chariot, au moins une ouverture (116) selon des dimensions transversales (D") substantiellement supérieures à celles (d) de l'organe de guidage, on place le chariot (110) dans la position précise qu'il doit occuper, on délimite ainsi un espace intercalaire (122) entre les parois de l'ouverture (116) et la périphérie extérieure en regard de l'organe de guidage (108), on remplit cet espace intercalaire (122) avec une résine polymérisable et on forme, par polymérisation de cette résine, un fourreau (124) entre les parois de l'ouverture et au moins une partie de la périphérie extérieure de l'organe de guidage (108).

## Description

La présente invention concerne un procédé de montage d'un chariot d'entraînement d'un appareil de marquage sur au moins un organe de guidage, ainsi qu'un appareil de marquage correspondant.

Au sens de l'invention, le terme générique d'appareil de marquage désigne tout appareil permettant de réaliser un motif sur la surface d'une pièce, que ce soit par impression, déformation ou enlèvement de matière au niveau de cette surface.

De façon connue, un appareil de marquage comprend un bâti supportant un mécanisme d'entraînement d'un outil de marquage, qui peut être notamment un stylet pneumatique ou une tête de gravure. De manière habituelle, ce mécanisme d'entraînement comporte un élément fixe par rapport au bâti, pourvu de rebords sur lesquels sont disposées deux barres de guidage. Un premier chariot d'entraînement est monté à coulissement sur celles-ci et se trouve lui-même muni, de deux barres supplémentaires, qui sont perpendiculaires au premier couple de barres précitées et sont destinées à la réception d'un second chariot d'entraînement auquel est assujetti l'outil de marquage.

Grâce à l'utilisation de ce mécanisme d'entraînement dit "à chariots croisés", l'outil de marquage est propre à se déplacer selon deux directions perpendiculaires entre elles, par rapport au bâti.

Le procédé de montage de chaque chariot sur les barres de guidage qui le reçoivent consiste tout d'abord à ménager au moins un alésage dans ce chariot, puis à rapporter dans chaque alésage au moins un palier auto-lubrifiant, par exemple par collage ou par emmanchement à force. Cet ensemble ainsi constitué est ensuite monté à coulissement sur les barres de guidage.

Ce procédé de montage connu présente cependant certains inconvénients. En effet, il s'accompagne d'une opération de positionnement extrêmement minutieuse de ce chariot par rapport au palier auto-lubrifiant, qui implique un usinage particulièrement précis des alésages précités. Ce procédé induit donc un temps et un coût de fabrication élevés.

Afin de pallier ces inconvénients, l'invention vise à proposer un procédé qui, tout en assurant un montage précis du chariot d'entraînement sur son organe de guidage, est simple et rapide à mettre en oeuvre et permet de s'affranchir de toute opération d'usinage coûteux.

A cet effet, elle a pour objet un procédé de montage d'un chariot d'entraînement d'un appareil de marquage sur au moins un organe de guidage, ledit chariot étant solidaire d'un palier permettant le glissement du chariot sur l'organe de guidage, procédé dans lequel on ménage, dans ledit chariot, au moins une ouverture propre à recevoir le palier et on intercale ce palier entre les parois de l'ouverture et l'organe de guidage, caractérisé en ce qu'on rapporte une bague intermédiaire autour dudit organe de guidage, on réalise ladite ouverture selon des dimensions transversales substantiellement supérieures à celles de ladite bague intermédiaire, on place le chariot dans la position précise qu'il doit occuper, on délimite ainsi un espace intercalaire entre les parois de l'ouverture et la périphérie extérieure en regard de la bague, on remplit cet espace intercalaire avec une résine polymérisable et on forme, par polymérisation de cette résine, un fourreau entre les parois de l'ouverture et au moins une partie de la périphérie extérieure de ladite bague intermédiaire.

L'invention a également pour objet un procédé de montage d'un chariot d'entraînement d'un appareil de marquage sur au moins un organe de guidage, ledit chariot étant solidaire d'un palier permettant le glissement du chariot sur l'organe de guidage, procédé dans lequel on ménage, dans le chariot, au moins une ouverture propre à recevoir le palier et on intercale ce palier entre les parois de l'ouverture et l'organe de guidage, caractérisé en ce qu'on réalise l'ouverture selon des dimensions transversales substantiellement supérieures à celles de l'organe de guidage, on place le chariot dans la position précise qu'il doit occuper, on délimite ainsi un espace intercalaire entre les parois de l'ouverture et la périphérie extérieure en regard de l'organe de guidage, on remplit cet espace intercalaire avec une résine polymérisable et on forme, par polymérisation de cette résine, un fourreau entre les parois de l'ouverture et au moins une partie de la périphérie extérieure de l'organe de guidage.

L'invention a enfin pour objet un appareil de marquage, comprenant un bâti, un outil de marquage et au moins un chariot d'entraînement dudit outil de marquage, le ou chaque chariot étant monté à coulissement par rapport à au moins un organe de guidage, ledit organe de guidage étant logé dans une ouverture correspondante ménagée dans le chariot, un palier de glissement étant interposé entre ledit organe de guidage et les parois en regard de l'ouverture correspondante, caractérisé en ce que ledit palier comprend un fourreau qui est formé d'une résine polymérisable à l'état solide et qui s'étend au voisinage des parois de l'ouverture.

L'invention va être décrite ci-dessous, en référence aux dessins annexés, donnés uniquement à titre d'exemples non limitatifs et dans lesquels :
- la figure 1 est une vue en perspective d'un appareil de marquage conforme à l'invention ;
- les figures 2 et 3 sont des vues en coupe schématique, illustrant deux étapes du montage, sur un organe de guidage, d'un chariot: appartenant à l'appareil de marquage de la figure 1 ; et
- la figure 4 est une vue analogue à la figure 3, illustrant une variante de réalisation de l'invention.

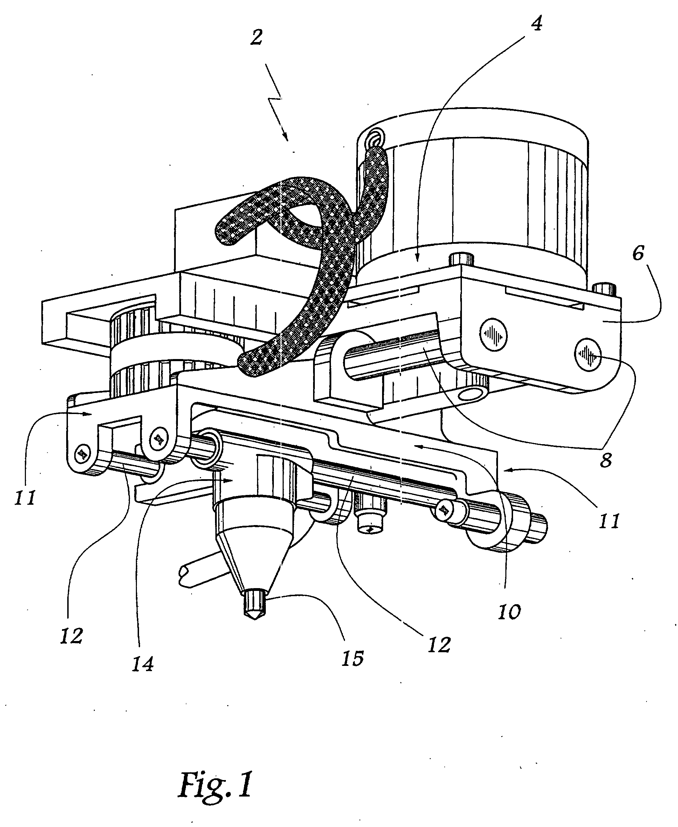

L'appareil de marquage représenté à la figure 1 et désigné dans son ensemble par la référence 2 comprend, de manière connue en soi, un bâti fixe 4 comprenant deux rebords 6 en regard. Ces derniers supportent deux barres 8, qui constituent des organes de guidage pour le déplacement d'un premier chariot 10, selon l'axe principal de ces barres.

Ce premier chariot d'entraînement 10 est muni de deux rebords 11 en regard, entre lesquels s'étendent deux barres 12 de guidage supplémentaires, les deux paires de barres 8, 12 étant disposées sensiblement à cingle droit.

Les barres 12 assurent le guidage d'un second chariot 14, sur lequel est rapporté un outil de marquage 15, qui peut être par exemple un stylet pneumatique ou encore une tête de gravure. Ces deux chariots 10, 14 forment un mécanisme d'entraînement de l'appareil de marquage 2, et assurent le positionnement de l'outil de marquage selon deux directions orthogonales entre elles. La mise en mouvement respective des deux chariots 10, 14 est assurée de manière connue en soi, par l'intermédiaire de moteurs électriques non représentés.

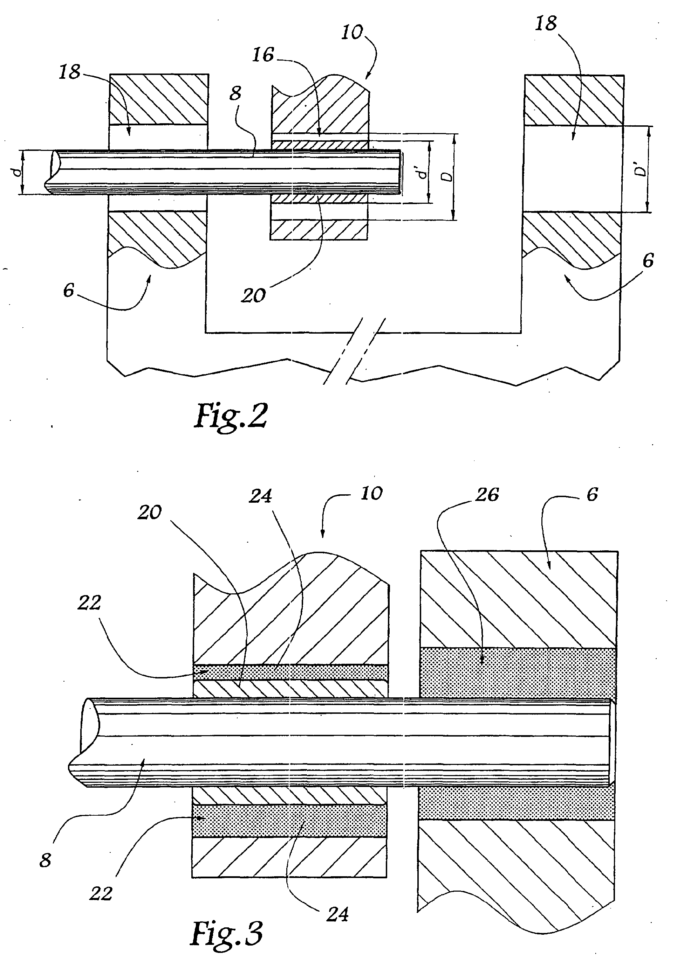

Le montage de chaque chariot d'entraînement 10, 14 sur les barres de guidage 8, 12 va être explicité en référence aux figures 2 et 3. Dans ces dernières, il sera uniquement fait référence au montage du chariot 10 sur les barres 8, étant entendu que le montage du chariot 14 sur les barres 12 est analogue.

La figure 2 illustre partiellement le chariot 10, destiné à être monté sur les barres 8. Ce dernier est creusé de deux ouvertures traversantes sensiblement cylindriques, dont une seule 16 est représentée. Cette ouverture possède une dimension transversale, ou diamètre, affectée de la référence D.

Par ailleurs, des orifices traversants 18, destinés à la réception de chaque barre 8, sont ménagés dans les rebords 6. Chaque orifice 18 possède une dimension transversale, ou diamètre D', qui est sensiblement plus grande que celle de la barre, à savoir le diamètre constant d de cette dernière.

En vue du montage du chariot 10 sur chaque barre 8, il convient tout d'abord de faire passer une des extrémités de cette dernière au travers des orifices 18, puis de déplacer axialement cette barre, de sorte que sa seconde extrémité soit placée entre les deux rebords 6, comme le montre la figure 2. Puis, on rapporte deux bagues, dont une seule 20 est représentée, autour de chaque barre, depuis la seconde extrémité précitée. Ces bagues, qui sont de type classique, sont par exemple réalisées en bronze et sont auto-lubrifiantes. On note d' leur diamètre extérieur, ou dimension transversale extérieure.

Une fois les deux bagues 20 disposées autour de la barre 8, on rapporte, depuis la seconde extrémité de cette barre, le chariot 10, de sorte que ces bagues 20 sont reçues à l'intérieur de l'ouverture 16. L'ouverture 16 est réalisée de telle sorte que son diamètre D est supérieur à celui d' des bagues 20.

Puis, on déplace à nouveau axialement chaque barre 8, de sorte que ses deux extrémités sont reçues dans les orifices 18 de chaque rebord 6. On positionne ensuite ces extrémités selon la conformation que doit présenter le dispositif de marquage une fois réalisé. A cet effet, la barre 8 est maintenue par rapport à une surface de référence du bâti 4, selon des orientations appropriées, conformément à l'enseignement de EP-A-0 915 260.

Une fois les barres 8 immobilisées par rapport aux rebords 6, on positionne le chariot 10 par rapport à chaque barre 8, selon l'agencement précis qu'il doit occuper, une fois assujetti à ces barres 8. Etant donné que le diamètre D de l'ouverture 16 est supérieure à celui d' des bagues 20, la périphérie extérieure de ces derniers définit, avec les parois en regard de l'ouverture 16, un espace intercalaire 22 à peu près annulaire (figure 3).

Tout en maintenant: les barres 8 et le chariot 10 dans leurs positions relatives évoquées ci-dessus, on remplit chaque espace intercalaire 22 au moyen d'une résine polymérisable, par exemple une résine époxy ou polyuréthane. On peut également prévoir d'utiliser d'autres types de matériaux durcissables équivalents.

De façon analogue, on coule une certaine quantité de cette résine dans les espaces intercalaires définis entre la périphérie extérieure des extrémités de la barre 8 et les parois en regard des orifices 18.

On assure ensuite la polymérisation de cette résine, de manière connue en soi. Une fois cette polymérisation achevée, la résine solidifiée remplissant l'espace intercalaire 22 forme un fourreau 24 séparant les parois en regard des bagues 20 et du chariot 10. Par ailleurs, deux fourreaux supplémentaires 26 sont réalisés entre les parois en regard de la barre 8 et des rebords 6.

Ainsi, le chariot 10 est parfaitement assujetti aux bagues 20, de sorte que ce chariot 10 est apte à coulisser sur la barre 8, selon une orientation correspondant à l'agencement visé de l'appareil de marquage. Ce fourreau 24 forme ainsi, avec les bagues 20, un palier du chariot 10.

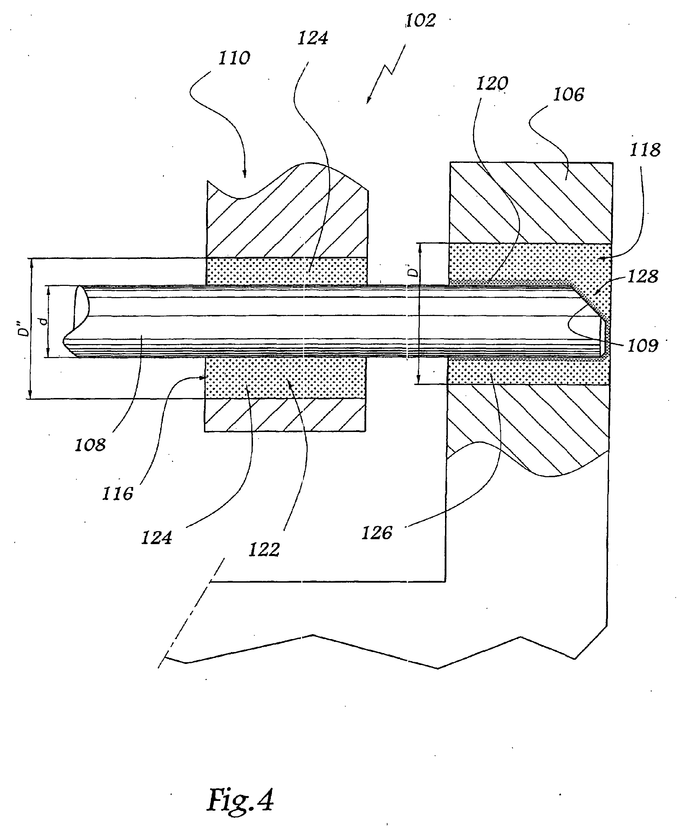

La figure 4 illustre une variante de réalisation de l'invention. Sur cette figure, les éléments mécaniques analogues à ceux des figures 1 à 3 sont affectés des mêmes numéros de référence, augmentés de 100.

La barre 108 de l'appareil de marquage 102 possède un diamètre d constant et se trouve pourvue de deux chanfreins 109 d'extrémité. Par ailleurs, le chariot 110 est creusé de deux ouvertures traversantes, sensiblement cylindriques, dont une seule 116 est représentée. Ces ouvertures possèdent un diamètre intérieur D'' qui, tout en étant sensiblement supérieur à celui d de la barre 108, est inférieur au diamètre D des ouvertures 16 des figures précédentes.

En vue du montage du chariot 110 sur les barres 108, on applique un revêtement anti-adhésif, à savoir un film 120 d'un vernis anti-adhésif, sur l'extrémité des barres de guidage 108, puis on fait passer ces dernières au travers des orifices 118, comme dans l'exemple décrit en référence aux figures 1 à 3. On rapporte ensuite le chariot 110 autour de chaque barre 108, de sorte que ces dernières sont logées dans les ouvertures 116. Il est à noter que ce mode de réalisation ne fait pas appel à des bagues, telles que celles 20 des figures 1 à 3.

On fait ensuite coulisser axialement les barres 108, de sorte que leurs extrémités pénètrent dans les orifices 118. Puis, on positionne de manière précise les extrémités des barres 108 par rapport aux rebords 106, ainsi que le chariot 110 par rapport à chaque barre 108, de façon analogue à ce qui a été décrit précédemment.

On coule ensuite une résine polymérisable dans chaque espace intercalaire 122, défini par les parois en regard de chaque ouverture 116 et de chaque barre 108, de façon à former des fourreaux 124. On intercale également une certaine quantité de cette résine entre les faces en regard de la barre 108 et des orifices 118 ménagés dans les rebords 106. Cette résine peut être analogue à celle évoquée dans l'exemple des figures 1 à 3. Elle peut également être additivée, de manière à posséder un coefficient de frottement réduit. On peut également revêtir l'ensemble de la barre 108 avec le film anti-adhésif 120.

Le montage du chariot 110 par rapport à la barre 108 selon un agencement précis est ainsi obtenu, le coulissement de ce chariot 110 par rapport à ces barres 108 étant permis grâce au fourreau de résine 124, qui constitue ainsi un palier du chariot 110.

Par ailleurs, bien que les extrémités de la barre 108 soient recouvertes d'un vernis anti-adhésif, cette barre est parfaitement immobilisée axialement par rapport aux rebords 106, puisque ces extrémités viennent en butée contre des poches 128 des fourreaux 126, ces poches 128 s'étendant au voisinage des chanfreins 109.

Si l'on désire démonter la barre 108, par exemple en vue de sa réparation, on casse l'une des poches 128, comme décrit dans EP-A-0 915 260, de sorte que l'extrémité correspondante de la barre 108 est alors libre de coulisser axialement par rapport au fourreau correspondant 126, du fait de la présence du vernis anti-adhésif 120.

L'invention n'est pas limitée aux exemples décrits et représentés. En effet, on peut prévoir de disposer une vis sur là paroi extérieure d'au moins un des rebords 6, 106, ou bien encore d'entourer au moins l'une des extrémités des barres 8, 108 au moyen d'une bague, ces deux possibilités étant conformes à l'enseignement de EP-A-0 915 260. Il est également possible de fixer les extrémités de chaque barre 8, 108 par rapport aux rebords correspondants 6, 106, sans faire appel à une résine polymérisable.

L'invention permet de réaliser les objectifs précédemment mentionnés.

En effet, étant donné que chaque ouverture 6, 116 est réalisée selon des dimensions transversales nettement supérieures à celles des bagues 20 ou de la barre 108 revêtue du vernis anti-adhésif 120, l'usinage correspondant ne requiert aucune précision particulière. Ceci assure donc un montage notablement plus rapide et moins coûteux que dans l'art antérieur.

La phase de positionnement relative du chariot par rapport à la barre peut être mise en oeuvre grâce à des moyens mécaniques simples et n'induit donc pas d'efforts importants susceptibles d'altérer la géométrie de l'ensemble de l'appareil de marquage, une fois réalisé.

Intercaler le fourreau de résine directement entre le chariot et l'organe de guidage est avantageux, puisque cela permet de s'affranchir de l'emploi d'une bague intermédiaire. De la sorte, pour un diamètre de barre donné, il est possible de réaliser un chariot dont les dimensions sont réduites, ce qui induit une diminution correspondante de la masse de ce chariot. Ceci constitue un avantage appréciable, notamment en termes de rapidité de déplacement du chariot, ainsi qu'en termes de coûts énergétiques inhérents à son déplacement.

## Revendications

1. Procédé de montage d'un chariot d'entraînement (10, 14) d'un appareil de marquage (2) sur au moins un organe de guidage (8, 12), ledit chariot étant solidaire d'un palier (20, 24) permettant le glissement du chariot sur l'organe de guidage (8, 12), procédé dans lequel on ménage, dans ledit chariot, au moins une ouverture (16) propre à recevoir le palier (20, 24) et on intercale ce palier entre les parois de l'ouverture (16) et l'organe de guidage (8, 12), **caractérisé en ce qu**'on rapporte une bague intermédiaire (20) autour dudit organe de guidage (8, 12), on réalise ladite ouverture (16) selon des dimensions transversales (D) substantiellement supérieures à celles (d') de ladite bague intermédiaire, on place le chariot (10, 14) dans la position précise qu'il doit occuper, on délimite ainsi un espace intercalaire (22) entre les parois de l'ouverture (16) et la périphérie extérieure en regard de la bague (20), on remplit cet espace intercalaire (22) avec une résine polymérisable et on forme, par polymérisation de cette résine, un fourreau (24) entre les parois de l'ouverture et au moins une partie de la périphérie extérieure de ladite bague intermédiaire.

2. Procédé de montage d'un chariot d'entraînement (110) d'un appareil de marquage (102) sur au moins un organe de guidage (108), ledit chariot étant solidaire d'un palier (124) permettant le glissement du chariot sur l'organe de guidage (108), procédé dans lequel on ménage, dans le chariot, au moins une ouverture (116) propre à recevoir le palier (124) et on intercale ce palier entre les parois de l'ouverture (116) et l'organe de guidage (108), **caractérisé en ce qu**'on réalise l'ouverture (116) selon des dimensions transversales (D'') substantiellement supérieures à celles (d) de l'organe de guidage, on place le chariot (110) dans la position précise qu'il doit occuper, on délimite ainsi un espace intercalaire (122) entre les parois de l'ouverture (116) et la périphérie extérieure en regard de l'organe de guidage (108), on remplit cet espace intercalaire (122) avec une résine polymérisable et on forme, par polymérisation de cette résine, un fourreau (124) entre les parois de l'ouverture et au moins une partie de la périphérie extérieure de l'organe de guidage (108).

3. Appareil de marquage (2), comprenant un bâti (4), un outil de marquage (15) et au moins un chariot (10, 14 ; 110) d'entraînement dudit outil de marquage, le ou chaque chariot étant monté à coulissement par rapport à au moins un organe de guidage (8, 12 ; 108), ledit organe de guidage étant logé dans une ouverture (16 ; 116) correspondante ménagée dans le chariot, un palier de glissement étant interposé entre ledit organe de guidage et les parois en regard de l'ouverture correspondante (16 ; 116), **caractérisé en ce que** ledit palier (20, 24 ; 124) comprend un fourreau (24 ; 124) qui est formé d'une résine polymérisable à l'état solide et qui s'étend au voisinage des parois de l'ouverture (16 ; 116).

4. Appareil de marquage suivant la revendication 3, **caractérisé en ce que** ledit fourreau (24 ; 124) s'étend contre les parois de l'ouverture (16 ; 116).

5. Appareil de marquage suivant la revendication 3 ou 4, **caractérisé en ce que** le fourreau (24) s'étend entre les parois de l'ouverture (16) et une bague de glissement (20) solidaire du chariot (10, 14), ladite bague étant rapportée à coulissement autour de l'organe de guidage (8).

6. Appareil de marquage suivant la revendication 3 ou 4, **caractérisé en ce que** le fourreau (124) s'étend entre les parois de l'ouverture (116) et l'organe de guidage (108).

7. Appareil de marquage selon l'une des revendications 3 à 6, **caractérisé en ce que** le ou chaque organe de guidage (8, 12 ; 108) est fixé sur un support (6), chaque extrémité dudit organe de guidage étant logée dans un orifice (18 ; 118) correspondant ménagé dans le support (6 ; 106), ledit orifice possédant des dimensions transversales substantiellement supérieures à celles des extrémités de l'organe de guidage, un fourreau supplémentaire (24 ; 124), formé d'une résine polymérisable à l'état solide, s'étendant entre la périphérie extérieure de chaque extrémité et les parois en regard de chaque orifice (18 ; 118).

8. Appareil de marquage selon la revendication 7,
**caractérisé en ce que** l'organe de guidage (108) peut coulisser axialement par rapport à chaque fourreau supplémentaire (126) et en ce qu'il est prévu, au voisinage de chaque extrémité de cet organe de guidage, des moyens amovibles (128) d'immobilisation axiale de chaque extrémité par rapport au support (106).

9. Appareil de marquage selon la revendication 8, **caractérisé en ce qu**'un revêtement anti-adhésif (120) est disposé à la périphérie extérieure des extrémités de l'organe de guidage (108).

10. Appareil selon l'une des revendications 3 à 9, **caractérisé en ce que** ledit appareil est réalisé selon le procédé conforme à l'une des revendications 1 ou 2.
